Europäisches Patentamt

European Patent Office

Office européen des brevets

(11) Veröffentlichungsnummer: **0 196 458**
**A2**

## (12) EUROPÄISCHE PATENTANMELDUNG

(21) Anmeldenummer: 86102513.8

(22) Anmeldetag: **26.02.86**

(51) Int. Cl.4: **C08G 63/66** , C09D 3/16 , C14C 11/00

(30) Priorität: **04.03.85 DE 3507505**

(43) Veröffentlichungstag der Anmeldung:
**08.10.86 Patentblatt 86/41**

(84) Benannte Vertragsstaaten:
**AT BE CH DE FR GB IT LI NL SE**

(71) Anmelder: Henkel Kommanditgesellschaft auf Aktien
Postfach 1100 Henkelstrasse 67
D-4000 Düsseldorf-Holthausen(DE)

(72) Erfinder: Anzinger, Hermann, Dr.
Jakob-Kneip-Strasse 146
D-4000 Düsseldorf(DE)
Erfinder: Fischer, Herbert, Dr.
Am Nettchesfeld 14
D-4000 Düsseldorf 13(DE)
Erfinder: Friese, Hans Herbert, Dr.
Schiesshecke 53
D-4019 Monheim(DE)
Erfinder: Meffert, Alfred, Dr.
Marie-Curie-Strasse 10
D-4019 Monheim(DE)
Erfinder: Schulz, Horst
Bockumer Platz 4
D-4150 Krefeld(DE)

(54) **Polyätherpolyester.**

(57) Beschrieben werden Polyetherpolyester auf Basis von Ringöffnungsprodukten epoxidierter Fettsäuren oder epoxidierter Alkohole mit mehrfunktionellen Alkoholen und üblicher kurzkettiger difunktioneller Komponenten als Kettenbildner. Die neuen Polyetherpolyester eignen sich als Weichmacher für Nitrocelluloselacke beispielsweise in der Lederzurichtung.

EP 0 196 458 A2

"Polyetherpolyester"

Die Erfindung betrifft neue Polyetherpolyester, die durch Umsetzung epoxidierter Fettsäureester oder epoxidierter Fettalkohole mit difunktionellen aliphatischen Alkoholen unter Ringöffnung und anschließende Kondensation der Reaktionsprodukte mit difunktionellen Alkoholen, difunktionellen Carbonsäuren oder mit sich selbst hergestellt werden können. Die Produkte eignen sich insbesondere als Weichmacher für Nitrocelluloselacke.

Es ist seit langem bekannt, natürlich vorkommende Öle und Fette (Triglyceride von Fettsäuren bzw. Fettsäuregemischen, die wenigstens anteilsweise olefinisch ungesättigte Doppelbindungen enthalten) oder auch Fettalkohole, die daraus durch Reduktion der Estergruppe unter Erhalt der Anzahl und Lage der Doppelbindungen zugänglich sind, der Epoxidation zu unterwerfen und dabei eine oder sämtliche Doppelbindungen im Molekül in Epoxidringe zu überführen. Ein dazu geeignetes Verfahren wird z.B. von Thomas W. Findley et al. in J. Am. Chem. Soc. 67, 413 (1945) beschrieben.

Weiterhin ist es bekannt, epoxidierte Fettsäureester oder epoxidierte Fettalkohole mit ein-oder mehr funktionellen Alkoholen der Ringöffnung zu unterziehen. Ein entsprechendes Verfahren wird beispielsweise von A. Bilyk et al. im J. Am. Oil Chem. Soc. 51, 119 (1974) zur Umsetzung der Ester beschrieben. Die Umsetzung von Fettalkoholen ist Gegenstand der DE-A-3246611.

Die ringgeöffneten Fettalkohole bzw. Fettalkoholester können als solche für eine Reihe von Anwendungen eingesetzt werden. So beschreibt beispielsweise die DE-A-3318596,die Umsetzungsprodukte epoxidierter Fettsäureester mit mehrfunktionellen Alkoholen nach der Ringöffnung einer Verseifung zu unterziehen und die so erhaltenen Carbonsäuren als Dispergatoren einzusetzen. Schließlich ist es aus der DE-A-3246618 bekannt, die Ringöffnungsprodukte mit mono-, di-und trifunktionellen Komponenten, wie beispielsweise Fettsäuren, Tricarbonsäuren und anderen üblichen Alkydharzrohstoffen zu Lackharzen zu kondensieren.

Vor dem Hintergrund dieses Standes der Technik haben sich die Erfinder die Aufgabe gestellt, spezielle Polyetherpolyester auf Basis der Ringöffnungsprodukte epoxidierter Fettsäurederivate mit difunktionellen aliphatischen Alkoholen bereitzustellen, die als Weichmacher für Nitrocelluloselacke eingesetzt werden können und dabei dem mit einem solchen Nitrocelluloselack behandelten Leder besonders günstige Eigenschaften verleihen. So sollen die Weichmacher insbesondere die mechanische Beständigkeit des Leders (Verhalten bei Knickungen, Reibechtheit naß und trocken) gegenüber Standardprodukten wie Dioctylphthalat verbessern.

Gegenstand der Erfindung sind somit Polyetherpolyester auf Basis von Ringöffnungsprodukten epoxidierter Fettsäuren, Fettsäureestern oder Fettalkoholen und mehrfunktionellen Komponenten, dadurch gekennzeichnet, daß sie Veresterungsprodukte darstellen von

-Ringöffnungsprodukten aus

epoxidierten Fettsäuren und/oder epoxidierten Fettsäureestern oder epoxidierten Fettalkoholen einerseits und

diprimären Alkoholen andererseits

-mit einem Kettenbildner aus

Dicarbonsäuren und/oder

difunktionellen primären Alkoholen

-und/oder mit sich selbst,

wobei bei Einsatz der Ringöffnungsprodukte von Fettalkoholen stets Dicarbonsäuren mit eingesetzt werden.

Die erfindungsgemäßen Polyetherpolyester sind somit Kondensationsprodukte von den benannten Ringöffnungsprodukten einerseits und Kettenbildnern andererseits.

Die erfindungsgemäßen Ringöffnungsprodukte von epoxidierten Fettsäureestern, epoxidierten Fettsäuren und epoxidierten Fettalkoholen werden im folgenden über ihre Herstellung beschrieben, wenngleich diese nicht beansprucht wird. Geeignete Ringöffnungsprodukte erhält man, indem man von ungesättigten Fettsäureestern oder ungesättigten Fettsäuren ausgeht. Geeignete Rohstoffe sind Fettsäureester oder Fettalkohole mit Iodzahlen zwischen 50 und 150. So können Fettsäureester oder Fettsäuren aus tierischen oder pflanzlichen Fetten und Ölen eingesetzt werden. Geordnet nach steigender Anfangsiodzahl sind das beispielsweise die folgenden: Rindertalg, Palmöl, Schmalz, Ricinusöl, Erdnußöl, Rüböl, Baumwollsaatöl, Sojabohnenöl, Tranöl, Sonnenblumenöl, Leinöl. Die Fettsäureester oder die korrespondierenden Fettalkohole, die in Anzahl und Lage der Doppelbindungen mit ihnen übereinstimmen, werden nach bekannten Verfahren, etwa unter Zuhilfenahme von Persäuren -wie Per-Essigsäure -epoxidiert. Die Epoxidation einfach ungesättigter Fettsäureester oder Fettalkohole läßt sich mit hohem Umsatz, etwa von 80 bis 100 Molprozent, durchführen. Bei mehrfach ungesättigten Estern bzw. Alkoholen wird vorwiegend die erste Doppelbindung quantitativ epoxidiert. Die Epoxidation weiterer Doppelbindungen erfordert meist drastische Reaktionsbedingungen. Zur Herstellung der erfindungsgemäßen Ringöffnungsprodukte werden epoxidierte Fettsäureester oder Fettalkohole verwendet, die 30 bis 100 Molprozent Epoxidgruppen, vorzugsweise 70 bis 95 Mol Epoxidgruppen, bezogen auf ursprünglich vorhandene Doppelbindungen, aufweisen.

Die epoxidierten Fettalkohole oder Fettsäureester werden sodann der katalytischen Ringöffnung mit difunktionellen Alkoholen unterworfen. Dabei kann sowohl mit Säuren als auch mit Basen katalysiert werden, wobei der sauren Katalyse im allgemeinen der Vorzug gegeben wird. Geeignete saure Katalysatoren sind Säuren wie Schwefelsäure, Phosphorsäure oder Toluolsulfonsäure. Die Reaktion wird bei Temperaturen zwischen 50 und 130°C, vorzugsweise zwischen 70 und 100°C durchgeführt.

In den erfindungsgemäßen Polyetherpolyestern eingesetzte Ringöffnungsprodukte enthalten je nach Menge der eingesetzten Reaktanten und nach Art der Zudosierung Moleküle unterschiedlicher Struktur. So entsteht bei der Zugabe der epoxidierten Fettsäureester oder Fettalkohole zu einem Überschuß von difunktionellem Alkohol in erster Linie das 1:1-Addukt. Das 1:1-Addukt ist ein Dialkylether, dessen einer Alkylrest dem epoxidierten Fettsäureester bzw. Fettalkohol entstammt und in Betastellung zur Ethergruppe eine sekundäre Hydroxylgruppe aufweist. Der andere Alkylrest entstammt der difunktionellen Hydroxyverbindung. Er trägt eine endständige Hydroxylgruppe.

Befindet sich in einer Reaktionsmischung das entstandene 1:1-Addukt neben unumgesetzter difunktioneller Hydroxyverbindung, so kann der Epoxidring eines weiteren Moleküls, epoxidierten Fettalkohols oder epoxidierten Fettsäureesters einerseits durch die Umsetzung mit der difunktionellen Hydroxyverbindung (dem difunktionellen Alkohol) zu einem weiteren Molekül-1:1-Addukt geöffnet werden, andererseits kann jedoch auch eine Reaktion mit einer Hydroxylgruppe des 1:1-Addukts zu einem 2:1-Addukt stattfinden. Die 2:1-Addukte enthalten pro Molekül des difunktionellen Alkohols 2 Molekülreste, die aus dem epoxidierten Fettalkohol oder dem epoxidierten Fettsäureester entstehen. Darüberhinaus ist beim Einsatz epoxidierter Fettalkohole auch eine andere Struktur denkbar, wenn die Alkoholgruppe des Fettalkohols mit einem Epoxidring eines anderen Fettalkoholmoleküls reagiert. Beim Einsatz epoxidierter Fettsäureester kann darüberhinaus unter den gewählten Reaktionsbedingungen auch Umesterung stattfinden, so daß der epoxidierte Fettalkoholester zu einem Halbester oder Diester des eingesetzten difunktionalen Alkohols umgeestert wird.

Zur Herstellung erfindungsgemäß geeigneter Produkte geht man bevorzugt von den Methyl-, Ethyl-oder Propylestern epoxidierter Fettsäuren aus. Einsetzbar sind jedoch auch epoxidierte Triglyceride.

Als difunktionelle Alkohole zur Ringöffnung der epoxidierten Fettsäureester oder Fettalkohole werden bevorzugt lineare oder verzweigte primäre Alkohole mit 2 bis 10, vorzugsweise 2 bis 6 C-Atomen und bis zu 3 Ethersauerstoffatomen eingesetzt. Bevorzugt sind beispielsweise Ethylenglykol, Di-und Triethylenglykol, 1,3-Propandiol, 1,4-Butandiol, Neopentylglykol, 1,6-Hexandiol. Weiter geeignet sind Addukte von Ethylenoxid an primäre difunktionelle Alkohole, soweit sie nicht mehr als 10 und vorzugsweise nicht mehr als 6 C-Atome aufweisen.

Zur Herstellung der erfindungsgemäßen Polyetherpolyester haben die folgenden Typen von Ringöffnungsprodukten besondere Bedeutung:

1. 1:1-Addukte aus epoxidierten Fettalkoholen und difunktionellen primären Alkoholen. Derartige Produkte stellen Triole dar mit 2 primären und 1 sekundären OH-Gruppe.

2. 2:1-Addukte aus epoxidierten Fettsäurealkylestern primärer Alkohole und Alkoholen, die 2 primäre OH-Gruppen enthalten. Hierbei handelt es sich um Produkte mit 2 Estergruppen und 2 sekundären OH-Gruppen.

3. Von weiterer Wichtigkeit sind die Verseifungsprodukte der unter 2. genannten Verbindungen zu den freien Carbonsäuren.

4. Schließlich sind von Bedeutung die Umsetzungsprodukte 1:1 von epoxidierten Fettsäureestern mit difunktionellen Alkoholen.

Sowohl epoxidierte Fettsäureester als auch epoxidierte Fettalkohole enthalten auf Grund ihrer natürlichen Herkunft mehr oder minder große Beimengungen an gesättigten und damit monofunktionellen Verbindungen. Der Begriff "funktionell" bezieht sich nicht auf Gruppen ohne Iieteroatome, beispielsweise nicht auf C=C Doppelbindungen. Die monofunktionellen Verbindungen können bei der Ringöffnungsreaktion mit zur Reaktion gebracht worden sein oder auch solche erhalten geblieben sein und wirken dann bei der Herstellung der Polyetherpolyester aus den Ringöffnungsprodukten als Kettenabbrecher.

Nach einer weiteren Ausführungsform der Erfindung werden die epoxidierten Fettalkohole bzw. epoxidierten Fettsäureester neben oder anstelle der difunktionellen Alkohole mit diprimären Alkoholen, die noch weitere sekundäre Hydroxylgruppen enthalten z.B. mit Glycerin der Ringöffnung unterzogen. So können beispielsweise Methyl-, Ethyl-oder Propylester epoxidierter Fettsäuren oder epoxidierte Fettalkohole in der Weise mit Glycerin umgesetzt werden, daß die primären OH-Gruppen die Ringöffnung bewirken, wohingegen die sekundäre OH-Gruppe zumindest überwiegend nicht an der Reaktion teilnimmt. Die dazu nötigen Reaktionsbedingungen stimmen mit denen bei der Ringöffnung durch Ethylenglykol überein.

Nach einer ersten Ausführungsform der Erfindung werden die Ringöffnungsprodukte mit Dicarbonsäuren als Kettenbildner zu den erfindungsgemäßen Polyetherpolyestern umgesetzt. Hier sind aromatische wie aliphatische Dicarbonsäuren geeignet. Bevorzugt sind Dicarbonsäuren mit 3 bis 10 C-Atomen, beispielsweise Glutalsäure, Bernsteinsäure, Adipinsäure, Sebacinsäure oder olefinisch ungesättigte Dicarbonsäuren, wie Maleinsäure, Fumarsäure, Tetrahydrophthalsäure, oder aromatische Carbonsäuren, wie die isomeren Phthalsäuren. Bei der Herstellung der Polyetherpolyester können die Dicarbonsäuren als solche eingesetzt werden. Es können jedoch auch ihre reaktiven Derivate, beispielsweise Säureanhydride, verwendet werden.

Nach einer weiteren Ausführungsform der Erfindung werden die Ringöffnungsprodukte außer mit Dicarbonsäuren auch zusätzlich noch mit difunktionellen Alkoholen, insbesondere mit difunktionellen diprimären Alkoholen umgesetzt. Bevorzugt sind hier lineare Alkohole, jedoch können auch verzweigte oder cyklische Verbindungen eingesetzt werden. Es ist weiterhin bevorzugt, Alkohole einzusetzen mit 2 bis 20 C-Atomen und bis zu 3 Ethersauerstoffatomen, wobei auch noch weitere Heteroatome im Molekül vorhanden sein können, wie etwa Stickstoff oder Schwefel. So sind die bei der Ringöffnung der epoxidierten Fettsäureester oder Fettalkohole eingesetzten Alkohole einschließlich Glycerin geeignete Alkohole. Darüberhinaus können mit Erfolg auch Fettsäurediethanolamide eingesetzt werden. Bevorzugte Diethanolamide leiten sich von Fettsäuren mit 8 bis 22 C-Atomen, insbesondere von kürzer kettigen Fettsäuren, z.B. Kokosfettsäure, ab.

Nach einer weiteren bevorzugten Ausführungsform der Erfindung sind die Polyetherpolyester aufgebaut aus den difunktionellen primären Alkoholen und den Ringöffnungsprodukten epoxidierter Fettsäureester oder epoxidierter Fettsäuren. Sie enthalten somit keine weiteren Dicarbonsäuren.

Nach einer weiteren bevorzugten Ausführungsform der Erfindung sind die Polyetherpolyester Eigenkondensate. So können beispielsweise die 1:1-Addukte aus diprimären Alkoholen und epoxidierten Fettsäureestern einer Eigenkondensation unterworfen werden, da sie sowohl Carboxyl-als auch Hydroxylfunktionen enthalten. Auch die 2:1-Produkte aus 2 Teilen epoxidierten Fettsäureestern und 1 Teil diprimärer Alkohol können unter drastischen Bedingungen polykondensiert werden.

Die erfindungsgemäßen Polyetherpolyester können durch das Einsatzmolverhältnis von Ringöffnungsprodukten zu Kettenbildnern in ihrer Struktur variiert werden. So kann, wenn keine Eigenkondensation beabsichtigt ist, das Molverhältnis Ringöffnungsprodukte zu Kettenbildner zwischen 0,5 : 1 und 1 : 0,5 liegen. In vielen Fällen ist es erstrebens-

wert, Kettenbildner und Ringöffnungsprodukte in äquimolaren Mengen einzusetzen. Setzt man eigenkondensierbare Rohstoffe ein, so kann der Anteil der Kettenbildner auch im Bereich zwischen 1 : 0,5 und 1: 0 variiert werden.

Die erfindungsgemäßen Polyetherpolyester weisen einen relativ niederen Polymerisationsgrad auf. Unter Polymerisationsgrad wird hier die Anzahl der Ringöffnungsprodukteinheiten, bezogen auf ein durchschnittliches Polyetherpolyestermolekül, angesehen. Der Polymerisationsgrad kann zwischen 2 und 50, vorzugsweise zwischen 3 und 10 liegen. Um höhere Polymerisationsgrade zu erreichen, geht man von Ringöffnungsprodukten aus, die ihrerseits weniger monofunktionelle Komponenten enthalten, und setzt den Kettenbildner in streng äquimolaren Mengen zu.

Die erfindungsgemäßen Polyetherpolyester haben gegenüber anderen Polymeren weichmachende Wirkung. Sie eignen sich insbesondere als Weichmacher für Nitrocelluloselacke sowie für andere Einsatzgebiete von Polyesterweichmachern. Weitere Anwendungen betreffen die Verwendung als Gleit-und Trennmittel für PVC oder als Verlaufshilfsmittel für Pulverlacke. Darüberhinaus können die Produkte als Polyole bei der Polyurethanherstellung eingesetzt werden.

Beispiele

Beispiel 1

In einer Standard-Laborapparatur mit Wasserabscheider wurden vermischt:

-229 g (0,32 mol) Reaktionsprodukt von 2 mol Epoxystearinsäuremethylester mit 1 mol Glykol verseift zur freien Säure (Säurezahl 155, OH-Zahl 195)

-90 g Fettsäurediethanolamid (C12/C14-Fettsäure mit ca. 70 % C12-Anteil) OH-Zahl 397

-1 g 4-Toluolsulfonsäure

-300 ml Xylol

Das Gemisch wurde 4 Stunden unter Rückfluß zum Sieden erhitzt. Dabei wurde als Reaktionswasser 1 ml Kondensat azeotrop abgeschieden. Es wurden sodann 100 ml Xylol destillativ abgetrennt und anschließend weitere 4 Stunden am Sieden gehalten, wobei weiteres Reaktionswasser azeotrop abgeschieden wurde (ca. 2 ml). Das Lösungsmittel wurde sodann durch Vakuumdestillation entfernt. Erhalten wurde ein gelbes Öl, Säurezahl 1,5; OH-Zahl 136.

Beispiel 2

In einer Standard-Laborapparatur wurden zusammengegeben:

-274 g (0,38 mol) 2:1-Addukt aus Epoxystearinsäuremethylester und Ethylenglykol zur Säure verseift - (Säurezahl 155)

-42 g (0,4 mol) Neopentylglykol

-3 g Zinnstaub

Die Mischung wurde im Stickstoffstrom 7 h bei 210 °C gehalten. Dabei wurden 15 ml Kondensat abgetrennt. Es wurde sodann auf ca. 100 °C abgekühlt und in einem Vakuum von ca. 50 hPa während 1 h weitere flüchtige Komponenten abgetrennt. Nach Abdekantieren vom Katalysator wurde ein gelbes Öl mit Säurezahl 1,1 und OH-Zahl 173 erhalten.

Beispiel 3

Das Verfahren von Beispiel 2 wurde wiederholt. Eingesetzt wurden

-385 g (0,6 mol) eines Addukts von 2 mol 9,10-Epoxystearinsäuremethylester an 1 mol Ethylenglykol (Verseifungszahl 173, OH-Zahl 172)

-73 g (0,5 mol) Adipinsäure

-3 g Zinnstaub

Die Reaktionstemperatur im Sumpf betrug 200 °C, die Reaktionszeit 2 h. Bei Reaktionszeiten länger als 3 h wurde Vergelung beobachtet. Das Reaktionsprodukt hatte ölige Konsistenz; OH-Zahl 31, Säurezahl 12.

Beispiel 4

Verfahren wurde wie in Beispiel 2. Es wurden eingesetzt:

-396 g (0,5 mol) Reaktionsprodukt von 2 mol 9,10-Epoxystearinsäuremethylester mit 1 mol Glycerin (OH-Zahl 213)

-58,5 g (0,4 mol) Adipinsäure

-4 g Zinnstaub

Die Reaktionstemperatur betrug 195 °C, die Reaktionszeit 2 h. Es wurden 14 ml Reaktionswasser gewonnen. Das Produkt hatte ölige Konsistenz, eine OH-Zahl von 68 und eine Säurezahl von 15.

Beispiel 5

Verfahren wurde wie in Beispiel 2. Es wurden eingesetzt:

-851 g (1,2 mol) des gleichen Ringöffnungsproduktes wie bei Beispiel 4

-127 g (1,2 mol) Diethylenglykol

-1,0 g einer Organozinnverbindung (Swedcat ® 3) - (Hersteller: Swedstab AB)

Die Sumpftemperatur betrug 210 °C, die Reaktionszeit 2 h. Es wurden 59 g Methanol als Spaltprodukt gewonnen. Das Produkt hatte ölige Konsistenz und eine OH-Zahl von 196.

Beispiel 6

In einer Standard-Apparatur wurden zur Reaktion gebracht:

-413 g (1 mol) 1:1-Addukt aus Ethylenglykol und epoxidiertem Oleylalkohol (OH-Zahl 408)

- 296 g (2 mol) Phthalsäureanhydrid

Die Reaktion wurde 4 h bei 150 °C unter Stickstoff geführt. Das Produkt hatte eine Säurezahl von 145.

Nach Abkühlen wurden hinzugegeben:

-388 g (2 mol) Tetraethylenglykol

-5 g Zinnstaub

Es wurde sodann auf 200 °C aufgeheizt und 5 h bei dieser Temperatur unter Stickstoff gerührt. Danach wurde auf 170 °C abgekühlt und in einem Vakuum von ca. 50 hPa 1 h weitergerührt. Nach Abdekantieren vom Katalysator erhielt man ein öliges Produkt mit Säurezahl 4,2 und OH-Zahl 141.

Beispiel 7

In einer Standard-Laborapparatur wurden eingesetzt:

-200 g 1:1-Addukt von Ethylenglykol an 9,10-Epoxystearinsäuremethylester (OH-Zahl 252)

-2,4 g 25 Gew.-%ige methanolische Natriummethylatlösung

Unter Stickstoff wurde 4 h bei 140 °C unter Rühren zur Reaktion gebracht. Dabei destillierte Methanol ab. Es wurde sodann auf 100 °C abgekühlt und im Vakuum (30 hPa) weitere 3 h bei 140 °C gerührt. Nach Abkühlen wurde das Produkt mit Wasser katalysatorfrei gewaschen und getrocknet. Es hatte ölige Konsistenz und eine OH-Zahl von 119.

Beispiel 8

Ein weichmacherhaltiger Nitrocelluloselack wurde wie folgt hergestellt:

23,6 Gewichtsteile einer mit n-Butanol angefeuchteten Nitrocellulose (Viskositätsstufe 1 -20 sec. ASTM-Methode D 1343-56, 15,34 Teile trockene Nitrocellulose und 8,26 Teile n-Butanol) wurden mit 36,4 Gewichtsteilen Butylacetat und 40,0 Gewichtsteilen Xylol so lange verrührt, bis eine klare Lösung entstand.

Zu 88,5 Gewichtsteilen dieser Nitrocelluloselösung wurden jeweils 11,5 Gewichtsteile der erfindungsgemäß aufgeführten Weichmacher hinzugefügt und gut verrührt.

Die so hergestellten Nitrocellulose-Lacke wurden zum Zwecke der Applikation mit einer Mischung aus Ethylacetat/Butylacetat (1:1) im Verhältnis 1 Teil Lack und 2 Teile Lösemittelmischung verdünnt.

Ein vollnarbiges Rindoberleder wurde wie folgt vorbehandelt:

Farbflotte: 230 g Polyacrylatdispersion

100 g wäßrige Caseinfarbe

20 g wäßrige Wachsdispersion

300 g Wasser

Das zu behandelnde Rindoberleder erhält 2 Aufträge mittels Luftspritzpistole. Nach dem Trocknen wird das Leder bei 80 °C und 100 bar gebügelt. Danach erfolgt der obere Deckfarbenauftrag mit gleicher Flotte.

Als Abschluß wurden die erfindungsgemäß beschriebenen Nitrocellulose-Lacke durch zweimaligen Spritzauftrag aufgebracht. Nach dem Trocknen wurde das Leder bei 90 °C und 100 bar gebügelt.

Ein Polsterleder wurde wie folgt vorbehandelt:

Farbflotte: 250 g Polyacrylatdispersion

100 g wäßrige Caseinfarbe

35 g wäßrige Wachsdispersion

400 g Wasser

Das zu behandelnde Polsterleder erhält 2 Aufträge mittels Luftspritzpistole. Nach dem Trocknen wird das Leder bei 80 °C und 50 bar gebügelt.

Als Abschluß wurden die erfindungsgemäß beschriebenen Nitrocellulose-Lacke durch einen Spritzauftrag appliziert. Nach dem Trocknen wurde das Leder bei 80 °C und 50 bar gebügelt.

Methoden

Knickungen

Durchgeführt mit dem Bally-Flexometer in Anlehnung an DIN 53340

Naßreibfestigkeit

Durchgeführt mit dem Veslic-Reibtester in Anlehnung an DIN 53339.

Glanz und Fülle

Visuelle Beurteilung

Bügelbarkeit

Hier wurde besonders das Ausschwitzen des Weichmachers beurteilt.

Millbarkeit

Geprüft wurde in einem Millfaß. Die Lederoberfläche wurde mit Hilfe eines Mikroskops (50-fache Vergrößerung) beurteilt.

Weiterhin wurden die Nitrocelluloselacke auf Glas aufgetragen. Dabei wurden Aussehen und Härte beurteilt. Zur Beurteilung der Härte wurde die Pendelhärte nach König - (DIN 53 157) herangezogen.

Die Ergebnisse sind in Tabelle 1 zusammengestellt.

Oberleder

| Substanz aus Beispiel Nr. | Filmbeurteilung Glasaufzug | | Pendel-härte sec | Glanz u. Fülle | Bügel-barkeit[1] 110 $^{\circ}$ | Knickungen | | Naßreib-werte[2] | |
|---|---|---|---|---|---|---|---|---|---|
| | nach | trocken 48 h/95$^{\circ}$ | | | | 50000 | 20000 | Hübe | Note |
| 2064 - 1 | klar | klar | 47 | 4-5 | 5 | 4-5 | 2-3 | 400 | 4-5 |
| 2 | klar | klebt | 71 | 4-5 | 3 | 5 | 5 | 400 | 4-5 |
| 3 | klar | klar | 60 | 4-5 | 5 | 4-5 | 3 | 500 | 5 |
| 4 | klar | klar | 32 | 4-5 | 3 | 4-5 | 3 | 500 | 4-5 |
| 5 | klar | klar | 27 | 4-5 | 3 | 4-5 | 3 | 400 | 4-5 |
| 6 | klar | klar | 28 | 4-5 | 5 | 4-5 | 3 | 500 | 5 |
| 2041 - 7 | klar | klar | 46 | 4-5 | 5 | 4-5 | 3 | 300 | 4-5 |
| Diocyl-phthalat | klar | klar | 67 | 4-5 | 5 | 3-4 | 2-3 | 130 | 4 |

1) Beurteilung des Ausschwitzens auf der Finiflex     Note 1 = sehr schlecht

2) Linke Spalte: Beginn der Filmverletzung     Note 5 = sehr gut

    Rechte Spalte: Beurteilung des Endzustandes der Film-

       verletzung nach weiteren 50 Reibungen

Polsterleder

| Substanz aus Beispiel Nr. | Glanz u. Fülle | Bügelbarkeit 100 ° | Millbarkeit | | | Naßreibwerte | | Glanz nach dem Millen |
|---|---|---|---|---|---|---|---|---|
| | | | 2 h | 4 h | 6 h | Hübe | Note | |
| 2064 - 1 | 4 | 5 | 3-4 | - | - | 310 | 4-5 | 4-5 |
| 2 | 4-5 | 2-3 | 4 | 3 | - | 180 | 3-4 | 4-5 |
| 3 | 4-5 | 3-4 | 3 | - | - | 290 | 3 | 4-5 |
| 4 | 4-5 | 2 | 5 | 4 | 3 | 90 | 2-3 | 4 |
| 5 | 4-5 | 2 | 5 | 4 | 3-4 | 90 | 2-3 | 3-4 |
| 6 | 4 | 4 | 4 | 3 | 2 | 80 | 3-4 | 4 |
| 2041 - 7 | 4-5 | 4 | 4-5 | 4 | 3-4 | 200 | 4 | 4-5 |
| Diocyl- phthalat | 4-5 | 4 | 3-4 | - | - | 90 | 3 | 4 |

1) Beurteilung des Ausschwitzens auf der Finiflex  
2) Linke Spalte: Beginn der Filmverletzung  
   Rechte Spalte: Beurteilung des Endzustandes der Filmverletzung nach weiteren 50 Reibungen

Note 1 = sehr schlecht  
Note 5 = sehr gut

**Ansprüche**

1. Polyetherpolyester auf Basis von Ringöffnungsprodukten epoxidierter Fettsäuren, Fettsäureestern oder Fettalkoholen und mehrfunktionellen Komponenten, dadurch gekennzeichnet, daß sie Veresterungsprodukte darstellen von

Ringöffnungsprodukten aus

epoxidierten Fettsäuren und/oder epoxidierten Fettsäureestern oder epoxidierten Fettalkoholen einerseits und

diprimären Alkoholen andererseits

mit einem Kettenbildner aus

Dicarbonsäuren und/oder

difunktionellen primären Alkoholen

und/oder mit sich selbst,

wobei bei Einsatz der Ringöffnungsprodukte von Fettalkoholen stets Dicarbonsäuren miteingesetzt werden.

2. Polyetherpolyester nach Anspruch 1, dadurch gekennzeichnet, daß sie Ringöffnungsprodukte aus epoxidierten Fettsäuren, epoxidierten Fettsäureestern und/oder epoxidierten Fettalkoholen mit difunktionellen primären aliphatischen Alkoholen mit 2 bis 10, vorzugsweise bis 6 C-Atomen und bis zu 3 Ethersauerstoffatomen darstellen, insbesondere mit Ethylenglykol oder Neopentylglykol.

3. Polyetherpolyester nach den Ansprüchen 1 und 2, dadurch gekennzeichnet, daß Ringöffnungsprodukte epoxidierter Fettsäuren, Fettsäureester und/oder Fettalkohole mit diprimären Alkoholen, die noch weitere sekundäre Hydroxylgruppen enthalten, insbesondere mit Glycerin, vorhanden sind.

4. Polyetherpolyester nach den Ansprüchen 1 bis 3, dadurch gekennzeichnet, daß sie aus Ringöffnungsprodukten von epoxidierten Fettsäureestern herstellbar sind, deren Alkoholteil sich von primären monofunktionellen Alkoholen mit 1 bis 3 C-Atomen ableitet.

5. Polyetherpolyester nach den Ansprüchen 1 bis 4, dadurch gekennzeichnet, daß als Kettenbildner aromatische und/oder aliphatische Dicarbonsäuren mit 3 bis 10 C-Atomen enthalten sind.

6. Polyetherpolyester nach den Ansprüchen 1 bis 5, dadurch gekennzeichnet, daß als Kettenbildner difunktionelle primäre Alkohole mit 2 bis 20 C-Atomen, die linear oder verzweigt sein können, und bis zu 3 Ethersauerstoffatome oder auch weitere Heteroatome, wie N oder S enthalten können.

7. Polyetherpolyester nach den Ansprüchen 1 bis 6, dadurch gekennzeichnet, daß als Kettenbildner Fettsäurediethanolamide mit im Mittel 8 bis 22 C-Atomen im Fettsäurerest eingesetzt werden.

8. Polyetherpolyester nach den Ansprüchen 1 bis 7, dadurch gekennzeichnet, daß das Molverhältnis von Ringöffnungsprodukten zu Kettenbildnern 0,5 : 1 bis 2 : 1 beträgt.

9. Polyetherpolyester nach den Ansprüchen 1 bis 8, dadurch gekennzeichnet, daß der Polymerisationsgrad, ausgedrückt als die mittlere Anzahl der Ringöffnungsprodukte pro Polyetherpolyesterkette, 2 bis 50, vorzugsweise 3 bis 10 beträgt

10. Verwendung der Polyetherpolyester nach den Ansprüchen 1 bis 9 als Weichmacher für Nitrocelluloselacke, vorzugsweise in der Lederzurichtung.